(19) Europäisches Patentamt
European Patent Office
Office européen des brevets

(11) **EP 0 495 508 B1**

(12) **EUROPEAN PATENT SPECIFICATION**

(45) Date of publication and mention
of the grant of the patent:
**17.09.1997 Bulletin 1997/38**

(51) Int Cl.⁶: **G06T 7/20**, H04N 5/232,
G01S 3/786

(21) Application number: **92100731.6**

(22) Date of filing: **17.01.1992**

(54) **Image following apparatus**

Einrichtung zum Bildfolgen

Dispositif de poursuite d'image

(84) Designated Contracting States:
**DE FR GB**

(30) Priority: **17.01.1991 JP 15678/91**

(43) Date of publication of application:
**22.07.1992 Bulletin 1992/30**

(73) Proprietor: **MITSUBISHI DENKI KABUSHIKI KAISHA**
**Tokyo (JP)**

(72) Inventor: **Maekawa, Horoko,**
**c/o Mitsubishi Denki K.K.**
**Himeji-shi, Hyogo-ken (JP)**

(74) Representative: **Lehn, Werner, Dipl.-Ing. et al**
**Hoffmann Eitle,**
**Patent- und Rechtsanwälte,**
**Postfach 81 04 20**
**81904 München (DE)**

(56) References cited:
**EP-A- 0 165 169**

- **PATENT ABSTRACTS OF JAPAN vol. 015, no. 454 (E-1135)19 November 1991**
- **PATENT ABSTRACTS OF JAPAN vol. 6, no. 218 (E-139)(1096) 2 November 1982**

## Description

## BACKGROUND OF THE INVENTION

The present invention relates to an image following apparatus which is able to follow a moving object such as a vehicle in an automatic fashion.

A typical example of an image following apparatus utilizing an image signal generated by an image sensor is disclosed in Japanese Patent Publication No. 61-57756 corresponding to application number JP-A-57-123782. Such an image following apparatus is shown in Fig. 3. In this figure, a video camera 1 images an object 7 lying ahead thereof at predetermined time intervals and accordingly generates an image signal $a_{(i,j)}$ of analog form which is then converted from analog into digital form by an analog-to-digital (A/D) converter 2 and stored in a memory 3 or 4. A central processing unit (CPU) 6 performs image processing on a first or previously sensed image signal $a_{(i,j)}$ stored in the memory 3 and a second or currently sensed image signal $b_{(i,j)}$ stored in the memory 4 so as to examine a relationship therebetween. As a result, the CPU 6 forms a window on a display screen for displaying an image of the object 7 as currently sensed which has the best match with an image of the object 7 as previously sensed.

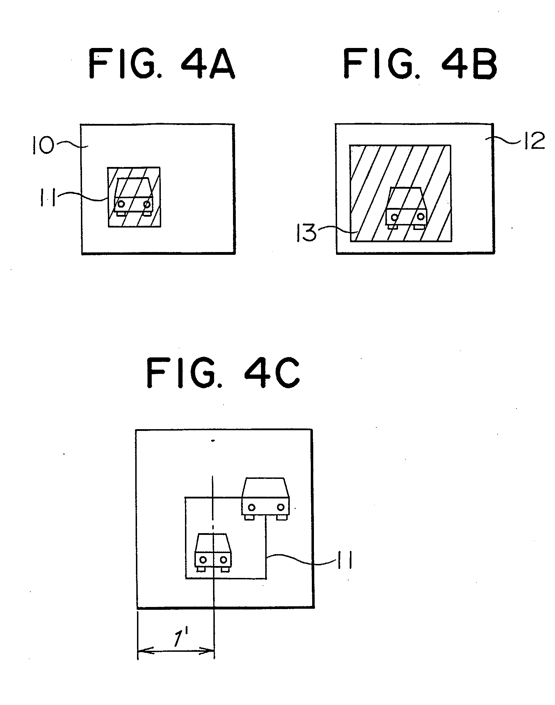

More specifically, the CPU 6 calculates such a relationship between a previous image signal a(i, j) {$1 \leq i \leq n1$ and $1 \leq j \leq m$} of a reference image 10, which is stored in the memory 3 and corresponds to a window 11 as shown in Fig. 4A, and a new image signal $b_{(i,j)}$ {$1 \leq i \leq N_1$ and $1 \leq j \leq M$} of a comparison image 12, which is stored in the memory 4 and corresponds to a window-neighboring area 13 as shown in Fig. 4B, in the following manner. First, a picture element or pixel signal $a_{(1, 1)}$ corresponding to the left-end top corner of a window-neighboring area 13, which encloses the window 11 and is larger than it, and another picture element signal $b_{(1, 1)}$ corresponding to the left-end top corner of the window 11 are read out from the memories 3, 4, and the absolute value $c_{(1, 1)}$ of a difference therebetween is calculated as follows:

$$c_{(1, 1)} = |a_{(1, 1)} - b_{(1, 1)}|$$

Such a calculation is sequentially carried out for all the remaining picture elements within the window 11 and the corresponding picture elements in the window-neighboring area 13, and all the absolute values thus obtained are summed up as follows:

$$s_{(1, 1)} = \Sigma\, c_{(i, j)}$$

Subsequently, the range in the window-neighboring area 13 for searching the window 11 is shifted to the right from the left top corner of the window-neighboring area 13 by one picture element, and an absolute value of a difference between a picture element signal $b_{(1, 2)}$ corresponding to the left-end top corner of the thus shifted window searching range and the picture element signal $a_{(1, 1)}$ corresponding to the left top corner of the window 11 is calculated as follows:

$$c_{(2, 1)} = |a_{(1, 1)} - b_{(1, 2)}|$$

Then, the absolute values thus obtained for all the picture elements within the window 11 are summed up as follows:

$$s_{(1, 2)} = \Sigma c_{(i, j)}$$

Similarly, the above calculations are carried out for all the remaining image signals within the window-neighboring area 13 while sequentially shifting the left-end top picture element signal $s_{(1, i)}$ {i varies from 1 to (M - m + 1)} of the window searching range in the window-neighboring area 13 to the right one picture element by one picture element. Subsequently, the window searching range is downwardly shifted from the left top corner of the window-neighboring area 13 by one picture element, and the absolute value $c_{(1, 1)}$ of a difference between a picture element signal $b_{(2, 1)}$ corresponding to the left top corner of the thus shifted window searching range and the picture element $a_{(1, 1)}$ corresponding to the left top corner of the window 11 is calculated as follows:

$$c_{(1, 1)} = |a_{(1, 1)} - b_{(2, 1)}|$$

Then, the absolute values $C_{(i, j)}$ thus obtained for all the picture elements in the window 11 are summed up in the same manner as described above to provide a total sum $s_{(2, i)}$ {i varies from 1 to (N - n + 1)}.

Finally, a minimum total sum, which gives a minimum value among all the total sums $s_{(j, i)}$ thus obtained for all the window searching ranges in the window-neighboring area 13, is determined, and a window searching range providing the minimum total sum is set as a new window which gives the best match with the window 11. The original window 11 is thus updated by the new window and it is stored in a memory, thus making it possible to follow the image of a moving object in the form of a preceding vehicle in an automatic fashion.

The above-described conventional image following apparatus, however, has the following drawback: if another object other than the target moving object, which has a relatively high contrast ratio (i.e., a high light reflection capability), comes into the window 11, the position of a new window as freshly set in the above manner will often be gradually deviated from the best position in which the target object is located substantially in the center of the window 11, so the apparatus may lose sight of the image of the target object at last.

## SUMMARY OF THE INVENTION

Accordingly, the present invention is intended to overcome the above-described problem encountered with the conventional image following apparatus, and has for its object the provision of a novel and improved image following apparatus which is always able to follow a target moving object in an extremely accurate manner without any influence from external disturbances.

In order to achieve the above object, according to the present invention, there is provided an image following apparatus as described in claim 1.

The above and other objects, features and advantages of the invention will become more readily apparent from the following detailed description of a preferred embodiment of the invention taken in conjunction with the accompanying drawings.

## BRIEF DESCRIPTION OF THE DRAWINGS

Fig. 1 is a block diagram schematically showing the general construction of an image following apparatus for a vehicle in accordance with the present invention;

Fig. 2A is a schematic view showing an original memory area storing a reference image and a mirror-image memory area storing a mirror image of the reference image;

Fig. 2B is a schematic view showing a comparison between a current image signal and the reference or mirror image signal;

Fig. 2C is a graphical representation showing a total sum of differences between the current image signal and the reference or mirror image signal with respect to the amount of horizontal displacement;

Fig. 3 is a schematic view showing the general construction of a conventional image following apparatus for a vehicle;

Fig. 4A is a view showing an original window in a reference image set by the apparatus of Fig. 3;

Fig. 4B is a view showing a window-neighboring area in a comparison image defined by the apparatus of Fig. 3; and

Fig. 4C is a view showing a new window set by the apparatus of Fig. 3 under the influence of an external disturbance.

In the drawings, the same or corresponding parts are identified by the same symbols.

## DETAILED DESCRIPTION OF THE PREFERRED EMBODIMENT

A preferred embodiment of the present invention will now be described in detail with reference to the accompanying drawings.

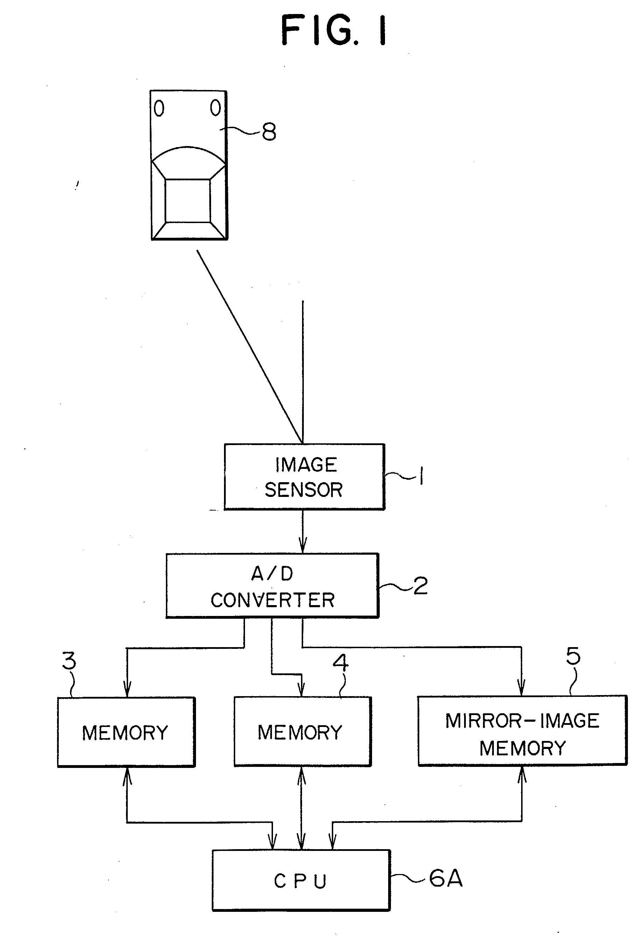

Referring to the drawings and first to Fig. 1, an image following apparatus for a vehicle constructed in accordance with the present invention is schematically illustrated in block form. The apparatus can be mounted on a vehicle for allowing it to follow a preceding vehicle. The apparatus illustrated in Fig. 1 includes an image sensor 1 in the form of a video camera for optically imaging a moving object 8 in the form of a preceding vehicle and generating a corresponding image signal of analog form, an A/D converter 2 for converting the analog output signal from the video camera 1 into digital form, a first and a second memory 3, 4 storing the digitized output signal from the A/D converter 2, a mirror-image memory storing a mirror image of the digitized output signal from the A/D converter 5, and a central processing unit (CPU) 6A for processing the image data stored in the memories 3, 4 and 5 and allowing a subject vehicle, on which the apparatus of the invention is mounted, to follow the target preceding vehicle 8.

More specifically, when the video camera 1 first catches the preceding vehicle 8 at time $t_0$, it generates an image signal $a_{(i, j)}$ ($1 \leq i \leq x0$, and $1 \leq j \leq y0$) representative of an image of the preceding vehicle 8, which is then converted from analog into digital form by the A/D converter 2 and stored in one of the first and second memories 3, 4. A mirror image $a_{(i, y0 - J + 1)}$ of the image signal $a_{(i, j)}$ is stored in the mirror-image memory 5. A new image signal for the preceding vehicle 8, which is produced by the video camera 1 after the lapse of a predetermined time from time $t_0$, is A/D converted by the A/D converter 2 and then stored in the other of the first and second memories 3, 4. A mirror image $b_{(i, y0 - j + 1)}$ of the preceding vehicle 8 at that time is also stored in the mirror-image memory 5.

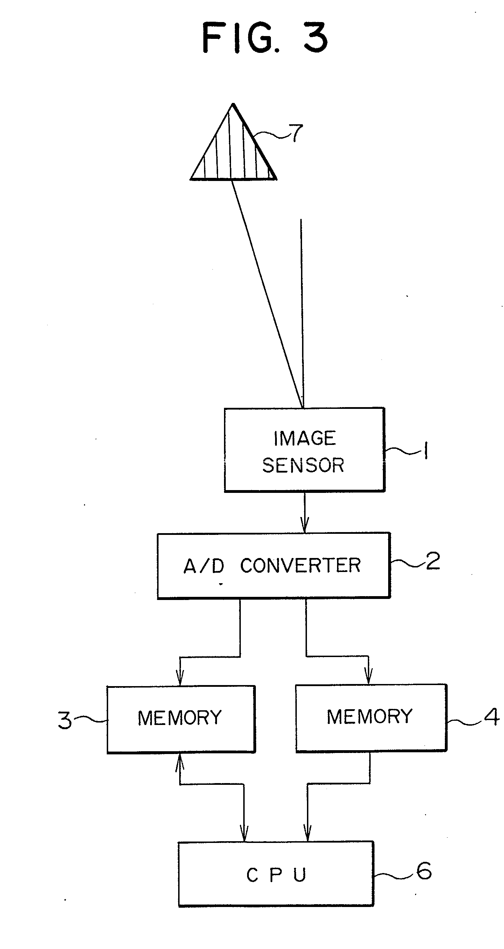

As previously explained with respect to the known vehicle following apparatus illustrated in Fig. 3 and Figs. 4A through 4C, the CPU 6A performs image processing for examining a relationship such as similarity between the image signal $a_{(i, j)}$ stored, for example, in the first memory 3 and the image signal $b_{(i, j)}$ stored, for example, in the second memory 4, and then forming and updating a window on a display screen at a location in which the image signals $a_{(i, j)}$ and $b_{(i, j)}$ have the most similarity or best match. Moreover, in the image following apparatus of the invention, the CPU 6A has a further function of making a comparison between the new mirror image signal $b_{(i, y0 - j + 1)}$ stored in the mirror-image memory 5 and an image signal $b_{(p, q)}$ in the updated window stored in the second memory 4, and finding a position of the window $b_{(x, y)}$ which provides the best match between these image signals, i.e., a position in which the image signals are the most symmetric with respect to the vertical center line of the window. As a result, even if some bright object other than the preceding vehicle 8 is coming into the window, the CPU 6A acts to prevent the position of the window thus determined from being deviated due to the influence of the bright object, thus enabling the subject vehicle to follow the preceding vehicle 8, which is symmetrical with respect to the vertical center line thereof, in a precise manner.

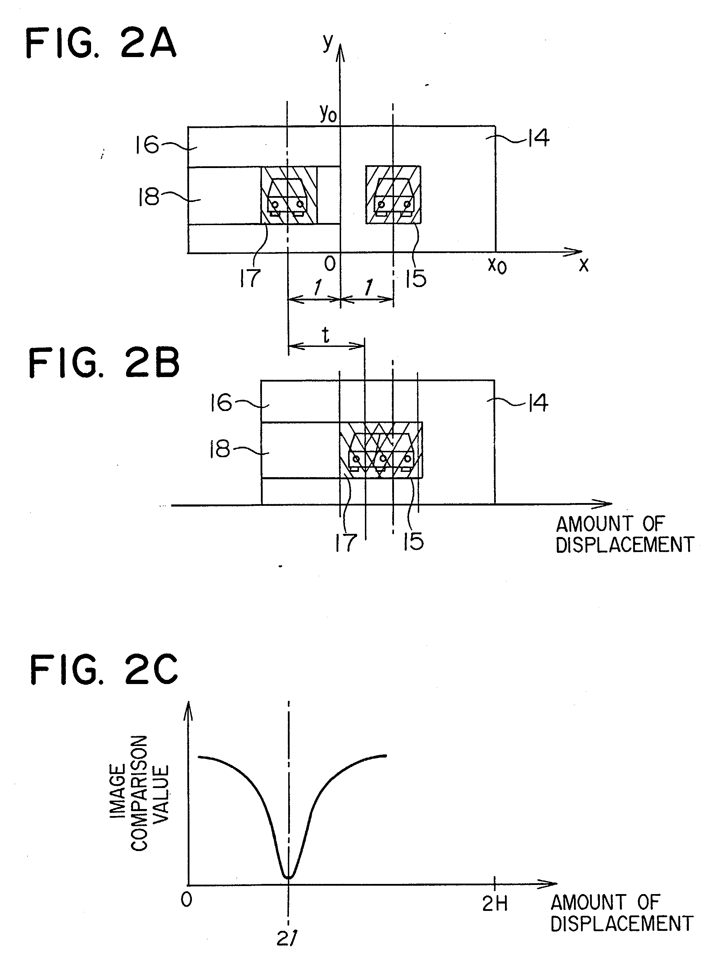

Next, the window position adjusting function of the image following apparatus of the invention will be described in detail with particular reference to Figs. 2A through 2C. First in Fig. 2A, a window 15 freshly set in a new (current) image signal 14 by the window updating function of the CPU 6A is represented by an image signal $b_{(p, q)}$; a mirror image signal 16 formed by reflecting image signal 14 about a vertical side line (i.e., y-axis) of the image 14 by the CPU 6A represents data stored in the mirror-image memory 5; and a mirror window 17 formed in the mirror image signal 16 by reflecting the window 15 about the vertical side line or y-axis of the image 14 is stored as data $b_{(p, y0 - q + 1)}$ in the mirror-image memory 5. As shown in Fig. 2B, a relationship such as similarity between the image signal $b_{(p, q)}$ in the window 15 and the image signal $b_{(i, j)}$ of corresponding data 16 in the mirror-image memory 5 is examined or calculated while successively displacing data 18 of a window-neighboring area in the mirror-image memory 5, which lie in the vicinity of the mirror window 17 in a horizontal band area horizontally corresponding to the mirror window 17, in a stepwise manner, e.g., by one bit or a plurality of bits at a time in a horizontal (i.e., x-axis) direction. As a result, a relationship or deviation between the image signal in the original window 15 and the image signal in the mirror window 17 with respect to the amount of displacement of the latter image signal is established, as illustrated in Fig. 2C. Specifically, by horizontally displacing data $b_{(i, j)}$ of the window-neighboring or horizontal band area 18 in the vicinity of the mirror window 17 by t bits at a time, an absolute value $c_{(1, 1)}$ of a difference between a pixel signal $b_{(1, 1)}$ at the left-end top corner of the original window 15 and a corresponding pixel data $b_{(i, j)}$ is calculated as follows:

$$c_{(1, 1)} = |b_{(1, 1)} - b_{(i, j)}|$$

Then, a similar calculation is performed for every pixel in the window 15, and absolute values $c_{(i, j)}$ thus obtained for all the pixels in the window 15 are summed up to provide a total sum $s_{(0)}$ as follows:

$$s_{(0)} = \Sigma c_{(i, j)}$$

Subsequently, by displacing the window 17 by t bits in the horizontal direction, an absolute value $c_{(1, 1)}$ of a difference between a pixel $b_{(1, 1)}$ at the left-end top corner of the window 15 and a corresponding pixel $b_{(i, j - t)}$ in the thus displaced window 17. Then, a total sum $s_{(t)}$ of the differences $c_{(i, j)}$ for all the pixels in the window 15 is calculated as follows:

$$s_{(t)} = \Sigma c_{(i, j)}$$

The result of such calculations is shown in Fig. 2C. If the image in the window 15 is symmetric with respect to the vertical center line thereof, the window 17 is completely superposed on or has the best match with the window 15 at a location in which the window 17 is displaced by a distance twice the distance $l$ between the vertical center line of the window 17 and the vertical line of symmetry or y-axis. Thus, an image comparison value or total sum $s_{(x)}$ becomes minimum when x is equal to $2l$. If, however, the image signal in the window 15 is not symmetric with respect to the vertical center line thereof as shown in Fig. 4C, the total sum $s_{(x)}$ becomes minimum at a location of the window 17 in which the image therein is the most symmetric with respect to the vertical center line of the window 17, that is when x is equal to $l'$. Accordingly, a specific value $x_0$ for x which gives a minimum of $s_{(x)}$ is first calculated, and then it is multiplied by 1/2 so that a new window having therein the most symmetric image with respect to the vertical center line thereof is set with its vertical center line being placed at a location of $x_0/2$.

As apparent from the foregoing, according to the present invention, even if a new window is formed at a location displaced from the best position by any external disturbances such as an object having a strong contrast ratio, the position of the new window is adjusted to the correct or best position in which the image in the window is the most symmetric with respect to the vertical center line of the window. As a result, the reliability and accuracy in following a moving object are improved, preventing the object-following function of the apparatus from becoming impossible due to an accumulation of errors produced during successive window forming operations.

Although in the above embodiment, a single image sensor in the form of a video camera is used, a pair of image sensors can be employed for measuring a distance to a moving object such as a preceding vehicle through the well-known principle of triangulation, and image following according to the present invention can be made by one of the image sensors. Thus, the present invention is applicable to an image-processing type vehicle distance measuring or warning apparatus, and an automatic vehicle following apparatus as well.

## Claims

1. An image following apparatus, comprising:

   a) an image sensor (1; fig. 1) for sensing an object (8) and for generating image data (10-15) corresponding to said sensed object (8) at predetermined time intervals ;

**b)** memory means (3, 4; fig. 1) for storing previous image data (10) generated by said image sensor at a previous time (t0) and current image data (10-15) generated at a current time ;

**c)** a windowforming/updating means (6A; fig. 1) for comparing previous window image data (11), representing the region of said previous image immediately surrounding said object (8), with successive regions of said current image data, so as to determine the location of an updated window (15) in said current image where the updated window image data best match said previous window image data;

characterized by :

**d)** mirror-image memory means (5) for storing mirror window image data (17) formed by reflecting the updated window image data contained in said updated window (15) about a vertical side line of said current image (14);

**e)** window adjusting means (6A) for comparing said updated window image data contained in said updated window (15) and said mirror window image data (17) stored in said mirror-image memory (5) while successively shifting said mirror window image data (17) and said updated window image data contained in said updated window (15) relative to each other in a horizontal (x-axis) direction by at least one bit until a best match between said updated window image data and said mirror window image data (17) is determined, said adjusting means being operable to adjust the horizontal position of said updated window (15) such that the vertical centre line of said updated window is placed at a distance (L, L') from said vertical side line of said current image corresponding to half the relative shifting distance required to determine said best match between said updated window image data and said mirror window image data, thereby maximising the symmetry of the image of said object (8) in said adjusted window thereby produced about the vertical center line of said adjusted window (15).

## Patentansprüche

1. Bildfolgevorrichtung, umfassend:

a) einen Bildsensor (1; Fig. 1) zum Erfassen eines Objekts (8) und zum Erzeugen von Bilddaten (10-15), die dem erfaßten Objekt (8) entsprechen, zu vorgegebenen Zeitintervallen;

b) eine Speichereinrichtung (3, 4; Fig. 1) zum Speichern von früheren Bilddaten (10), die von dem Bildsensor zu einer früheren Zeit (t0) erzeugt werden, und von gegenwärtigen Bilddaten (10-15), die zu einer gegenwärtigen Zeit erzeugt werden;

c) eine Fensterbildungs-/Aktualisierungseinrichtung (6A; Fig. 1) zum Vergleichen von früheren Fensterbilddaten (11), die den Bereich des früheren Bilds darstellen, der unmittelbar das Objekt (8) umgibt, mit sukzessiven Bereichen der gegenwärtigen Bilddaten, um so die Stelle eines aktualisierten Fensters (15) in dem gegenwärtigen Bild zu bestimmen, wo die aktualisierten Fensterbilddaten mit den früheren Fensterbilddaten am besten übereinstimmen;

**gekennzeichnet durch:**

d) eine Spiegelbild-Speichereinrichtung (5) zum Speichern von Spiegelfenster-Bilddaten (17), die durch Reflektieren der aktualisierten Fensterbilddaten, die in dem aktualisierten Fenster (15) enthalten sind, an einer vertikalen Seitenlinie des gegenwärtigen Bilds (14) gebildet werden; und

e) eine Fenstereinstelleinrichtung (6A) zum Vergleichen der in dem aktualisierten Fenster (15) enthaltenen aktualisierten Fensterbilddaten und der in dem Spiegelbild-Speicher (5) gespeicherten Spiegelfenster-Bilddaten (17), während die Spiegelfenster-Bilddaten (17) und die in dem aktualisierten Fenster (15) enthaltenen aktualisierten Fensterbilddaten relativ zueinander in einer horizontalen (x-Achse) Richtung um wenigstens ein Bit verschoben werden, bis eine beste Übereinstimmung zwischen den aktualisierten Fensterbilddaten und den Spiegelfenster-Bilddaten (17) bestimmt wird, wobei die Einstelleinrichtung betreibbar ist, um die horizontale Position des aktualisierten Fensters (15) so einzustellen, daß die vertikale Mittellinie des aktualisierten Fensters in einem Abstand (1, 1') von der vertikalen Seitenlinie des gegenwärtigen Bilds plaziert wird, der einer Hälfte des relativen Verschiebeabstands entspricht, der zum Bestimmen der besten Übereinstimmung zwischen den aktualisierten Fensterbilddaten und den Spiegelfenster-Bilddaten benötigt wird, wodurch die Symmetrie des Bilds des Objekts (8) in dem so erzeugten eingestellten Fenster um die vertikale Mittellinie des eingestellten Fensters (15) maximiert wird.

## Revendications

1. Dispositif de poursuite d'image, comprenant :

a) un capteur d'images (1 ; figure 1) pour détecter un objet (8) et pour générer des données d'image (10 - 15) correspondant à cet objet détecté (8) à des intervalles de temps prédéterminés ;

b) des moyens de mémoire (3, 4 ; figure 1) pour enregistrer des données d'image antérieure (10) générées par ledit capteur d'images à un moment antérieur (tO) et des données d'image actuelle (10 -15) générées à un moment actuel ;

c) des moyens de formation /mise à jour de fenêtre (6A ; figure 1) pour comparer des données d'image de fenêtre antérieure (11) représentant la zone de ladite image antérieure entourant immédiatement ledit objet (8), avec des zones successives de ces données d'image actuelle de manière à déterminer l'emplacement d'une fenêtre mise à jour (15) dans ladite image actuelle où les données d'image de fenêtre mise à jour concordent au mieux avec lesdites données d'image de fenêtre antérieure, caractérisé par :

d) des moyens formant mémoire d'image réfléchie (5) pour enregistrer des données d'image de fenêtre réfléchie (17) formées en réfléchissant les données d'image de fenêtre mise à jour contenues dans ladite fenêtre mise à jour (15) par rapport à une ligne latérale verticale de ladite image actuelle (14) ;

e) des moyens d'ajustement de fenêtre (6A) pour comparer lesdites données d'image de fenêtre mise à jour contenues dans ladite fenêtre mise à jour (15) et lesdites données de fenêtre réfléchie (17) enregistrées dans ladite mémoire d'image réfléchie (5) tout en décalant successivement, d'au moins un bit, lesdites données d'image de fenêtre réfléchie (17) et lesdites données d'image de fenêtre mise à jour contenues dans ladite fenêtre mise à jour (15) les unes par rapport aux autres dans un sens horizontal (axe des abscisses) jusqu'à ce que la meilleure concordance entre lesdites données d'image de fenêtre mise à jour et lesdites données d'image de fenêtre réfléchie (17) soit déterminée, lesdits moyens d'ajustement étant opérationnels pour ajuster la position horizontale de ladite fenêtre mise à jour (15) de telle sorte que la ligne centrale verticale de ladite fenêtre mise à jour est placée à une distance (L, L') de ladite ligne latérale verticale de ladite image actuelle correspondant à la moitié de la distance de décalage relative requise pour déterminer la meilleure concordance entre lesdites données d'image de fenêtre mise à jour et lesdites données d'image de fenêtre réfléchie, en maximisant de cette façon la symétrie de l'image de l'objet (8) dans ladite fenêtre ajustée ainsi créée par rapport à la ligne centrale verticale de ladite fenêtre ajustée (15).

# FIG. 1

IMAGE SENSOR ~ 1

A/D CONVERTER ~ 2

3

MEMORY

4

MEMORY

5

MIRROR-IMAGE MEMORY

C P U ~ 6A

# FIG. 2A

# FIG. 2B

AMOUNT OF DISPLACEMENT

# FIG. 2C

IMAGE COMPARISON VALUE

AMOUNT OF DISPLACEMENT

# FIG. 3

IMAGE SENSOR — 1

A/D CONVERTER — 2

3 — MEMORY    MEMORY — 4

CPU — 6

# FIG. 4A

# FIG. 4B

# FIG. 4C